# EUROPEAN PATENT APPLICATION

(11) **EP 3 879 657 A1**
(43) Date of publication of application: **15.09.2021**
(21) Application number: 19882593.7
(22) Date of filing: 28.08.2019
(51) Int. Cl.: H02H 7/26

(54) **DIRECTIONAL OVERCURRENT PROTECTION METHOD OF CIRCUIT BREAKER**

(30) Priority: 06.11.2018 CN 201811314495
(71) Applicant: Shanghai Liangxin Electrical Co., Ltd, Shanghai 201315 (CN)
(72) Inventor: FAN, Hongbin, Shanghai 201315 (CN); XIE, Jianbo, Shanghai 201315 (CN)
(74) Representative: Loyer & Abello
(86) International application number: PCT/CN2019/102979
(87) International publication number: WO 2020/093763

(57) **Abstract**

Disclosed is a directional overcurrent protection method of a circuit breaker, comprising fault direction determination, fault arbitration, and execution of a trip action. The directional overcurrent protection method of the circuit breaker can achieve the overcurrent directional protection only by means of an algorithm on the basis of the acquisition of voltage and current at an output side of the circuit breaker. Hardware costs are not increased because only the voltage and current at the output side of the circuit breaker need to be acquired.

## Description

### Technical Field

The present disclosure pertains to the technical field of circuit breakers, and specifically relates to a directional overcurrent protection method of a circuit breaker.

### Background Art

In the prior art, universal circuit breakers all have three-stage protection. In a power supply network with a single power source, a selective action can be implemented depending on the cooperative relationship between a setting value and time limit for the action when a fault occurs. In an actual power network, power may be supplied by a plurality of power sources. Especially power transmission networks and some power distribution networks mostly supply power by double-ended power sources. In such a dual power network for power supply, when a fault occurs, the setting value and the action delay alone cannot meet the requirements of selective tripping and may tend to cause protection misoperation.

Chinese Patent CN106849034 discloses an overcurrent protection method based on a closed-loop operation mode of a power distribution network for identifying and removing an overcurrent fault from an object to be protected in the power distribution network operating in the closed-loop mode. Specifically, two fault currents are measured at both ends of the object to be protected, phases of the two fault currents are calculated, respectively, fault directions at both ends of the object to be protected are determined based on the phases of the two fault currents, a position of the overcurrent fault is identified by comparing the fault directions at both ends of the object to be protected, and then the overcurrent fault is removed. According to this technical solution, the problem of misoperation or inaction in a power distribution network operating in a closed-loop mode is solved based on the closed-loop operation mode of the power distribution network, and the overcurrent protection can be performed quickly and reliably, thereby reducing the power failure range caused by a fault of the power distribution network and shortening the power failure time in the practical application. However, this technical solution requires two current measuring devices to be installed on the two sides of the object, which leads to an increased cost and is not conductive to the miniaturization of the size of the circuit breaker product.

### Summary

In view of the technical problem of failure in correctly selective tripping depending on the setting value and the action delay and occurrence of a misoperation in the above-mentioned prior art power supply network with dual power network, an objective of the present invention is to provide a directional overcurrent protection method for a circuit breaker, in which an overcurrent direction can be determined by acquiring voltage and current signals in one direction, whereby a tripping action can be correctly selected.

### Technical Solutions

In order to achieve the above technical objectives, the present disclosure provides a directional overcurrent protection method for a circuit breaker, characterized by comprising the following several steps:
(1) fault direction determination, wherein firstly overcurrent is determined by acquiring a current at an output side of the circuit breaker, and then a phase difference of the fault current is calculated by an algorithm based on a voltage and current in the circuit, where the phase difference represents a logical direction of the fault current;
(2) fault arbitration, wherein it is compared whether the logical direction of the fault current in the step (1) is consistent with a logical direction initially set for protection, and then it is determined, according to the comparison result, whether the circuit breaker needs to perform a fault removal action;
(3) performing a tripping action, wherein a tripping action is not performed if the comparison result in the step (2) indicates that the logical directions are consistent, and a tripping and opening action is performed by a tripping unit if the comparison result indicates that the logical directions are different.

Further, the calculation of the phase difference of the fault current by an algorithm based on a voltage and current in the circuit in the step (1) is carried out by a method of obtaining a difference between time points at which zero-crossings of a current and voltage of the same phase are measured and converting the difference into a phase difference Φ.

For a power network with a 50 Hz system, the phase difference is calculated with 20 ms (=1000ms/50) corresponding to 360 degrees.

For a power network with a 60 Hz system, the phase difference is calculated with 16.6 ms (=1000ms/60) corresponding to 360 degrees.

Further, when -90° < Φ < 90°, namely, when the current flows in a forward direction, it is indicated that the fault has occurred in a forward direction of the circuit breaker.

When 90° < Φ < 270°, namely, when the current flows in a reverse direction, it is indicated that the fault has occurred in a reverse direction of the circuit breaker.

### Advantageous Effects

In a directional overcurrent protection method for a circuit breaker according to the present disclosure, the directional overcurrent protection can be achieved only by means of an algorithm on the basis of the acquisition of a voltage and current on an output side of the circuit breaker. Firstly, the direction (orientation) of the fault current is measured, and then a presence or absence of a fault is determined. Moreover, hardware costs are not increased because it is only necessary to acquire the voltage and current at the output side of the circuit breaker.

### Detailed Description of the Embodiments

The present disclosure will be further described below in connection with the embodiments.

In an embodiment according to the present disclosure, a directional overcurrent protection method for a circuit breaker includes the following several steps.

In the first step, a direction of a fault current is determined. Specifically, firstly overcurrent is determined by acquiring a current at an output side of the circuit breaker, and then a phase of the fault current is calculated by an algorithm based on voltage and current values in the circuit, where the phase represents a logical direction of the fault current.

Here, the calculation of the phase of the fault current by an algorithm based on voltage and current values in the circuit is carried out by a method of obtaining a difference between time points at which zero-crossings of a current and voltage of the same phase are measured and converting the difference into a phase difference Φ.

For a power network with a 50 Hz system, the phase difference is calculated with 20 ms (=1000ms/50) corresponding to 360 degrees.

For a power network with a 60 Hz system, the phase difference is calculated with 16.6 ms (=1000ms/60) corresponding to 360 degrees.

Calculation results are described below.

When -90° < Φ < 90°, namely, when the current flows in a forward direction, it is indicated that the fault has occurred in a forward direction of the circuit breaker.

When 90° < Φ < 270°, namely, when the current flows in a reverse direction, it is indicated that the fault has occurred in a reverse direction of the circuit breaker.

In the second step, fault arbitration is carried out. Specifically, it is compared whether the logical direction of the fault current in the first step is consistent with a logical direction initially set by a control program, and then it is determined, according to the comparison result, whether the circuit breaker needs to perform a fault removal action.

In the third step, a tripping action is performed. Specifically, a tripping action is not performed if the comparison result in the step (2) indicates that the logical directions are consistent, and a tripping and opening action is performed by a tripping unit if the comparison result indicates that the logical directions are different.

The above embodiments can be changed or modified by those skilled in the art to which this patent pertains based on the disclosure and teaching of the above description. Therefore, the present disclosure is not limited to the above specific embodiments. Any obvious improvements, alternatives, or variations made by those skilled in the art based on the present disclosure would fall within the scope of the present disclosure as claimed.

In addition, although some specific terms are used in this specification, these terms are intended for convenience of description only and do not limit this patent in any way.

## Claims

1. A directional overcurrent protection method for a circuit breaker, **characterized by** comprising following steps:
(1) determining a fault direction, wherein firstly an overcurrent is determined by acquiring a current at an output side of the circuit breaker, and then a phase difference of the fault current is calculated by an algorithm based on a voltage and a current in a circuit, wherein the phase difference represents a logical direction of the fault current;
(2) performing a fault arbitration, wherein it is compared whether the logical direction of the fault current in the step (1) is consistent with a logical direction initially set for protection, and then it is determined, according to a comparison result, whether the circuit breaker needs to perform a fault removal action; and
(3) performing a tripping action, wherein the tripping action is not performed if the comparison result in the step (2) indicates that logical directions are consistent, and a tripping and opening action is performed by a tripping unit if the comparison result indicates that the logical directions are different.

2. The directional overcurrent protection method for a circuit breaker according to claim 1, wherein the phase difference of the fault current is calculated, by the algorithm based on the voltage and the current in the circuit in the step (1), by a method of obtaining a difference between time points at which zero-crossings of a current and a voltage of the same phase are measured and converting the difference into a phase difference Φ, wherein
for a power network with a 50 Hz system, the phase difference is calculated with 20 ms (=1000ms/50) corresponding to 360 degrees; and
for a power network with a 60 Hz system, the phase difference is calculated with 16.6 ms (=1000ms/60) corresponding to 360 degrees.

3. The directional overcurrent protection method for a circuit breaker according to claim 2, wherein
when -90° < Φ < 90°, namely, when a current flows in a forward direction, it is indicated that a fault has occurred in a forward direction of the circuit breaker; and
when 90° < Φ < 270°, namely, when a current flows in a reverse direction, it is indicated that a fault has occurred in a reverse direction of the circuit breaker.

4. The directional overcurrent protection method for a circuit breaker according to claim 1, wherein an initial setting of the logical direction for protection in the step (2) is implemented by a control program.
